# EUROPÄISCHE PATENTSCHRIFT

(11) **EP 0 853 642 B1**
(45) Veröffentlichungstag und Bekanntmachung des Hinweises auf die Patenterteilung: **13.11.2002**
(21) Anmeldenummer: 97932644.4
(22) Anmeldetag: 31.07.1997
(51) Int. Cl.: C08J 3/09, C08L 1/02, B01F 9/12

(54) **VERFAHREN ZUR HERSTELLUNG EINER CELLULOSESUSPENSION**
PROCESS FOR PREPARING A CELLULOSE SUSPENSION
PROCEDE DE PRODUCTION D'UNE SUSPENSION DE CELLULOSE

(30) Priorität: 01.08.1996 AT 137996
(43) Veröffentlichungstag der Anmeldung: 22.07.1998
(73) Patentinhaber: LENZING AKTIENGESELLSCHAFT, 4860 Lenzing (AT)
(72) Erfinder: SCHREMPF, Christoph, A-4701 Bad Schallerbach (AT); MÄNNER, Johann, A-4852 Weyregg (AT); MÖDERL, Ulrich, A-4860 Lenzing (AT); FEILMAIR, Wilhelm, A-4860 Lenzing (AT)
(74) Vertreter: Schwarz, Albin, Dr.
(86) Internationale Anmeldenummer: AT9700179
(87) Internationale Veröffentlichungsnummer: WO98005702

(56) Entgegenhaltungen:
- WO-A-94/28217
- WO-A-95/11261
- US-A- 4 246 221
- US-A- 4 611 922
- Ullmann, Enzyklopädie der Technischen Chemie, 4. Auflage, Band 2, Verfahrenstechnik I (Grundopera- tionen), Verlag Chemie, Weinheim/Bergstr., S. 290-291

## Beschreibung

Die vorliegende Erfindung betrifft ein Verfahren zur Herstellung einer homogenen Suspension von Cellulose in einer wäßrigen Lösung eines tertiären Aminoxids, wobei Zellstoff in einer Mischvorrichtung, die einen Behälter zur Aufnahme der Suspension und ein Mischwerkzeug aufweist, mit der wäßrigen Lösung des tertiären Aminoxids gemischt wird. Die Erfindung betrifft ferner ein Verfahren zur Herstellung cellulosischer Formkörper.

Seit einigen Jahrzehnten wird nach Verfahren zur Herstellung cellulosischer Formkörper gesucht, welche das heute in großem Maßstab angewendete Viskoseverfahren ersetzen sollen. Als eine nicht zuletzt wegen einer besseren ümweltverträglichkeit interessante Alternative hat sich dabei herauskristallisiert, Cellulose ohne Derivatisierung in einem organischen Lösungsmittel aufzulösen und aus dieser Lösung Formkörper, z.B. Fasern und Folien, zu extrudieren. Solcherart extrudierte Fasern erhielten von der BISFA (The International Bureau for the Standardization of man made fibers) den Gattungsnamen Lyocell®. Unter einem organischen Lösungsmittel wird von der BISFA ein Gemisch aus einer organischen Chemikalie und Wasser verstanden.

Es hat sich herausgestellt, daß sich als organisches Lösungsmittel insbesondere ein Gemisch aus einem tertiären Aminoxid und Wasser sehr gut zur Herstellung von cellulosischen Formkörpern eignet. Als Aminoxid wird dabei in erster Linie N-Methylmorpholin-N-oxid (NMMO) verwendet. Andere Aminoxide sind z.B. in der EP-A - 0 553 070 und in der US- A - 4,196,282 beschrieben. Ein Verfahren zur Herstellung formbarer Celluloselösungen ist z.B. aus der EP-A - 0 356 419 bekannt.

In der US-A - 4,246,221 ist ein Aminoxidverfahren zur Herstellung spinnbarer Celluloselösungen beschrieben, welches als Ausgangsmaterial u.a. eine Mischung von Cellulose in flüssigem, wäßrigem N-Methylmorpholin-N-oxid (NMMO) verwendet. Gemäß diesem Verfahren wird in einer diskontinuierlich arbeitenden Mischvorrichtung eine Suspension von zerkleinerter Cellulose in der wäßrigen Aminoxidlösung hergestellt und das Gemisch gleichzeitig unter vermindertem Druck erhitzt, wobei Wasser abgezogen wird und eine erste Lösung hergestellt wird, die nach Filtration und Nachbearbeitung in einem Extruder in eine formbare Lösung übergeführt wird. Als Mischvorrichtung zur Herstellung der Cellulosesuspension wird gemäß Beispiel I ein herkömmlicher Doppelarmmischer verwendet. In diesem Mischer wird eine Suspension mit einer Stoffdichte von etwa 20 Masse% Cellulose hergestellt. Dieses vorbeschriebene Verfahren besitzt jedoch den Nachteil, daß es diskontinuierlich ist und großtechnisch schwierig durchführbar ist.

Ferner wird in der US-A - 4,246,221 empfohlen, zur besonders schonenden und raschen Auflösung der Cellulose diese und das (feste) Aminoxidhydrat in gemahlenem Zustand einzusetzen. Dies ist jedoch nach Erfahrungen der Anmelderin nachteilig, da die Cellulose durch den Mahlvorgang beschädigt wird, wenn es z.B. zu einer örtlichen überhitzung kommt. Ferner ist es nachteilig, als Ausgangsstoff für die Herstellung der Celluloselösung ein festes Gemisch aus zerkleinerter Cellulose und zerkleinertem Aminoxid einzusetzen, da es aus der EP-A - 0 356 419 bekannt ist, daß eine Suspension von Cellulose in einem wäßrigen Aminoxid mit Hilfe der Dünnschichttechnik schneller, schonender und besser in die formbare Celluloselösung übergeführt werden kann.

Auch in der US-A - 4,416,698 wird dem Fachmann empfohlen, die Cellulose zu mahlen, und zwar bis zu einer Teilchengröße von kleiner als 0,5 mm.

Gemäß der DD-A - 226 573 wird zur Lösungsbereitung von einer NMMO-hältigen Cellulose-Suspension mit einer niedrigen Stoffdichte von maximal 2,5 Massen% Cellulose ausgegangen. Diese Cellulose-Suspension wird in einem Rührgefäß homogenisiert. Anschließend wird durch Zentrifugieren oder Abpressen die Stoffdichte auf 12,5 Massen% erhöht, auf einen Wassergehalt von 10 - 15 Massen% (bezogen auf NMMO) getrocknet und in einem Extruder mit Entgasungszone bei Temperaturen zwischen 75 und 120°C in eine klare Lösung übergeführt.

Das Verfahren gemäß der genannten DD-A - 226 573 ist mit dem Nachteil behaftet, daß nach der Homogenisierung die Stoffdichte von 2,5 Massen% auf 12,5 Massen% erhöht werden muß, bevor mit der eigentlichen Lösungsherstellung begonnen werden kann. Dies erfordert einen eigenen, zusätzlichen Arbeitsschritt. Außerdem ist beim Abpressen oder Zentrifugieren ein gleichmäßiger Abpreßgrad, der eine Voraussetzung für eine konstante Lösungszusammensetzung ist, nur schwierig zu erzielen.

In der WO 95/11261 der Anmelderin ist ein Verfahren bekannt, gemäß welchem (1) vorzerkleinerte cellulosische Materialien in eine wässerige Lösung eines tertiären Aminoxids eingebracht werden, um eine erste Suspension mit einer Trockenstoffdichte von mindestens 10 Massen% Cellulose herzustellen, (2) die erste Suspension einer Mahlung unterzogen wird, wobei eine zweite Suspension erhalten wird, und (3) die zweite suspension durch Wärmezufuhr unter vermindertem Druck in die formbare Celluloselösung übergeführt wird. Die Mahlung dient dazu, vereinzelt verbliebene Zellstoffteilchen weiter zu zerkleinern und in Einzelfasern aufzuspalten. Als Mahlgeräte werden herkömmliche Hochkonsistenzmischer, Disperger und Refiner vorgeschlagen.

Aus der WO 94/28217 ist ein Verfahren zur Herstellung einer Vormischung aus zerkleinerter Cellulose und wäßrigem Aminoxid bekannt, aus welcher eine formbare Celluloselösung hergestellt werden kann. Als Ausgangsmaterial wird Zellstoff in Rollenform verwendet, der zunächst in einer Schneidmaschine (Shredder) vorzerkleinert wird. Es wird in der WO 94/28217 darauf hingewiesen, daß beim Schneiden des Zellstoffs darauf geachtet werden soll, daß er an den Schnittkanten möglichst wenig zusammengedrückt wird, da dies das spätere Mischen mit der wäßrigen Aminoxidlösung erschwert. Zu diesem Zweck wird eine besondere Schneidmaschine empfohlen, in welcher Zellstoffstücke mit einer Größe von typischerweise maximal 15 cm² hergestellt werden. Als Nebenprodukt des Schneidevorganges entstehen jedoch beträchtliche Mengen an Zellstoffstaub.

Nach dem Schneiden in der Schneidmaschine wird der vorzerkleinerte Zellstoff in einem Ventilator mit Propellerblättern noch mehr zerkleinert und mittels Luft zu einem Sieb transportiert, in welchem der vorzerkleinerte Zellstoff vom Luftstrom abgetrennt wird. Das Sieb trennt alle Zellstoffteilchen mit einer Teilchengröße von mindestens 2,54 mm ab. Im verbleibenden Luftstrom befindet sich jedoch noch ein erheblicher Staubanteil mit einer Teilchengröße von weniger als 2,54 mm. Um diesen Zellstoff nicht zu verlieren, wird er in einer Filtriervorrichtung gesammelt und schließlich mit den größeren Zellstoffteilchen wieder vereinigt.

Zur Herstellung der Suspension werden die zerkleinerte Cellulose und die Aminoxidlösung in eine horizontal gelagerte, zylindrische Mischkammer eingebracht, welche einen Rotor mit axial beabstandeten Rührelementen aufweist. Die Mischung wird in der Mischkammer gerührt, indem der Rotor mit einer Geschwindigkeit von 40 bis 80 Umdrehungen pro Minute gedreht wird. An der Wand der zylindrischen Mischkammer sind noch vorzugsweise schnell rotierende Refinermesser vorgesehen, mit welchen die Zellstoffteilchen zerkleinert werden. Die kombinierte Wirkung der Rührschaufeln mit den schnell rotierenden Refinermessern führt schließlich zu einer homogenen Mischung, die bis zu etwa 13 Masse% Cellulose, bezogen auf die Masse der Suspension, aufweist.

Dieses vorbekannte Verfahren hat jedoch den Nachteil, daß es technisch aufwendig und langwierig ist, aus dem Rollenzellstoff schließlich die homogene Suspension herzustellen. Dazu kommt noch, daß das vorbekannte Verfahren diskontinuierlich ist und pro Charge allein an Mischzeit mehr als 20 Minuten in Anspruch nimmt. Ferner wäre es aus ökonomischen Gründen wünschenswert, Cellulosesuspensionen mit höherer Stoffdichte herzustellen und als Ausgangsprodukt noch größere Zellstoffstücke zu verwenden.

Zusammenfassend kann festgestellt werden, daß der Schritt der Herstellung der Cellulosesuspension, also des Ausgangsproduktes für die Herstellung der formbaren Celluloselösung, im Stand der Technik bis heute noch nicht befriedigend entwickelt ist. Herkömmliche Stofflöser bzw. Pulper, wie sie in vielfältigen Ausgestaltungen in der Viskosetechnik oder in der Papierindustrie verwendet werden, können im vorliegenden Fall nicht zufriedenstellend verwendet werden, da sie die Herstellung von Cellulosesuspensionen mit einer Stoffdichte von maximal nur etwa 11,5% erlauben, wie die Anmelderin festgestellt hat. Dies deshalb, weil durch die hohe Quellung des Zellstoffes in 60-78%igem, wäßrigen NMMO bei der erforderlichen Verarbeitungstemperatur von 60-90°C die Fließfähigkeit der Suspension so stark abnimmt, daß das Stoffgemenge Zellstoff/NMMO/Wasser keiner ausreichenden Scherung bzw. Durchmischung über das gesamte Mischgut mehr unterliegt.

Die vorliegende Erfindung stellt sich somit die Aufgabe, das Aminoxidverfahren in dieser Hinsicht weiterzuentwickeln und ein Verfahren zur Verfügung zu stellen, das die oben im Zusammenhang mit der WO 94/28217 genannten Nachteile nicht aufweist und mit welchem aus Zellstoff und einer wäßrigen Aminoxidlösung bedeutend einfacher eine homogene Cellulosesuspension hergestellt werden kann, die als Ausgangsprodukt für das Aminoxidverfahren verwendbar ist.

Das erfindungsgemäße Verfahren zur Herstellung einer homogenen Suspension von Cellulose in einer wäßrigen Lösung eines tertiären Aminoxids, wobei Zellstoff in einer Mischvorrichtung, die einen Behälter zur Aufnahme der Suspension und ein Mischwerkzeug aufweist, mit der wäßrigen Lösung des tertiären Aminoxids gemischt wird, ist dadurch gekennzeichnet, daß eine Mischvorrichtung eingesetzt wird, deren Behälter während des Mischens rotiert.

Mischer mit rotierenden Behältern sind bekannt (z.B. Ullmann, Enzyklopädie der Technischen Chemie, 4. Auflage, Band 2, S. 290-291). Die Erfindung beruht auf der Erkenntnis, daß es bei Verwendung eines derartigen Mischers nicht notwendig ist, Zellstoff durch Schneiden derart vorzuzerkleinern, wie es aus der WO 94/28217 bekannt ist, und daß es trotzdem möglich ist, eine homogene Suspension herzustellen, in welcher der Zellstoff praktisch in seine Einzelfasern aufgebrochen ist. Wird beispielsweise Blattzellstoff oder Zellstoff in Rollenform verwendet, so braucht dieses Ausgangsmaterial nicht auf Stücke mit einer Fläche von kleiner als 20 cm², vorzugsweise nicht kleiner als 100 cm², vorzerkleinert werden. Es ist sogar möglich, flächige Stücke mit einer Größe von über 1000 cm² als Ausgangsmaterial einzusetzen und direkt in den erfindungsgemäß verwendeten Mischer zu geben.

Durch die Möglichkeit, derart große Stücke direkt im Mischer zu verarbeiten, braucht nicht auf so kleine Stücke vorzerkleinert werden, wies dies aus der WO 94/28217 bekannt ist. Dadurch fällt bei der Vorzerkleinerung auch kein Zellstoffstaub an, wodurch sich der gesamte apparative Aufwand zur Abtrennung und Gewinnung des Staubes erübrigt. Ferner gelingt auch das Aufbrechen des Zellstoffs in seine Einzelfasern leichter, da der erfindungsgemäß eingesetzte Zellstoff bedeutend weniger Schnittkanten aufweist. Auch die Schädigung des Zellstoffs, die durch das Schneiden entsteht, ist dementsprechend gering.

Als weiterer Vorteil des erfindungsgemäßen Verfahrens hat es sich gezeigt, daß es möglich ist, Cellulosesuspensionen mit einer Stoffdichte von mehr als 13% herzustellen und dafür noch dazu eine konzentrierte Aminoxidlösung mit 78 Masse% NMMO zu verwenden.

Alle diese Effekt sind im umgekehrten Fall, also bei Verwendung eines Mischers mit unbewegtem, d.h. nicht rotierendem Behälter und rotierendem Mischwerkzeug, nicht erzielbar.

Eine bevorzugte Ausführungsform des erfindungsgemäßen Verfahrens besteht darin, daß die eingesetzte Mischvorrichtung ein Mischwerkzeug aufweist, welches während des Mischens nicht bewegt wird. Das Mischwerkzeug kann als Paddel, Leiste oder Wendel ausgebildet sein.

Bevorzugt ist das Mischwerkzeug so ausgebildet und im Behälter angeordnet, daß es während des Mischens eine Belagsbildung an den Innenoberflächen des Behälters, also an den Wänden, dem Boden und der Abdeckung, verhindert. Im einfachsten Fall ist es als Schaber ausgebildet.

Es hat sich ferner als zweckmäßig erwiesen, wenn die eingesetzte Mischvorrichtung ein Mischwerkzeug aufweist, welches während des Mischens rotiert. Dieses kann exzentrisch angeordnet sein. Das Mischwerkzeug rotiert zweckmäßigerweise im Gegensinn zum rotierenden Behälter.

Der Behälter kann so geformt sein, daß er eine Symmetrieachse aufweist, um welche er rotiert. In einer weiteren bevorzugten Ausführungsform wird das erfindungsgemäße Verfahren in einer Mischvorrichtung ausgeführt, deren Symmetrieachse während des Mischens zur Waagrechten geneigt ist.

Die im erfindungsgemäßen Verfahren eingesetzte wäßrige Lösung des tertiären Aminoxids enthält das Aminoxid, vorzugsweise NMMO, zwischen 60 und 82 Masse%. Das erfindungsgemäße Verfahren wird zweckmäßigerweise bei einer Temperatur zwischen 60 und 90°C ausgeführt.

Es ist dem Fachmann klar, daß auch Mischungen von verschiedenen Zellstoffen zur Suspensionsherstellung eingesetzt werden können. Es hat sich ferner gezeigt, daß es in der erfindungsgemäß verwendeten Mischvorrichtung auch nicht zu einem Entmischen von Hilfsstoffen, wie Stabilisatoren, Dispergiermittel, Spinnhilfen, reaktivitätsverbessernden Reagenzien, Inkorporationsmedien anorganischer oder organischer Natur (Baryt, Aktivkohle, SiO₂, CMC, Modifikatoren (Polyethylenglykole)) und andere Polymeren, wie z.B. Nylon®; Farbstoffe, die in der Suspension enthalten sind, kommt. Dies ist für eine volle Entfaltung der Wirkung dieser Hilfsstoffe von großer Bedeutung.

Die Erfindung betrifft ferner die Verwendung einer Mischvorrichtung mit einem rotierenden Behälter zur Herstellung einer homogenen Suspension von Cellulose in einer wäßrigen Lösung eines tertiären Aminoxids, wobei die zur Suspensionsherstellung eingesetzte Cellulose am besten eine Teilchengöße von mindestens 20 cm² besitzt.

Die Erfindung betrifft ferner ein Verfahren zur Herstellung einer formbaren Celluloselösung, welches dadurch gekennzeichnet ist, daß eine gemäß dem erfindungsgemäßen Verfahren hergestellte homogene Suspension unter Abdampfung von Wasser zu einer formbaren Celluloselösung verarbeitet wird. Die Herstellung der Celluloselösung wird zweckmäßig in einem Dünnschichtbehandlungsapparat durchgeführt. Ein derartiges Verfahren ist beispielsweise in der EP-A - 0 356 419 beschrieben. Eine Ausführungsform eines Dünnschichtbehandlungsapparates ist beispielsweise ein sogenannter Filmtruder, wie er von der Firma Buss AG (Schweiz) hergestellt wird. Ein Dünnschichtbehandlungsapparat ist auch in der DE-A 2 011 493 beschrieben.

Die im Jahre 1994 veröffentlichte WO 94/06530 benützt die aus der EP-A - 0 356 419 vorbekannte Dünnschichttechnik, um aus einer Mischung von Cellulose in einer wäßrigen Lösung eines tertiären Aminoxides zu einer formbaren Lösung zu gelangen. Das Verfahren wird analog einer in der EP-A - 0 356 419 vorbeschriebenen Ausführungsform in einem Filmtruder durchgeführt. Das Verfahren der WO 94/06530 stellt sich die Aufgabe, Energie zu sparen, und schlägt zur Lösung dieser Aufgabe vor, den Rotor langsamer zu drehen.

Die vorliegende Erfindung betrifft ferner ein Verfahren zur Herstellung cellulosischer Formkörper, das darin besteht, daß eine erfindungsgemäß hergestellte Cellulosesuspension in eine formbare Celluloselösung übergeführt wird, welche anschließend in an sich bekannter Weise zu Folien, Fasern, Membranen oder anderen Formkörpern verarbeitet wird.

Die erfindungsgemäß hergestellte Suspension kann über ein Dosiergerät direkt oder über einen geeigneten Pufferbehälter, wie z.B. in der PCT/AT96/00059 der Anmelderin und in der WO 94/28217 beschrieben ist, in den Filmtruder gespeist und dort zur Lösung verarbeitet werden. Die erfindungsgemäß hergestellte Suspension kann auch in anderen Vorrichtungen in die Celluloselösung übergeführt werden.

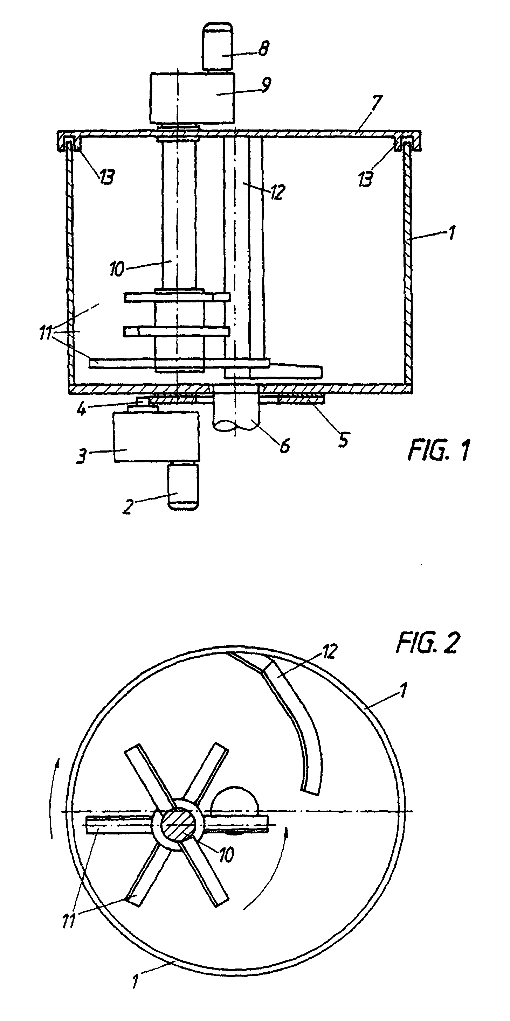

Eine im erfindungsgemäßen Verfahren bevorzugt verwendete Mischvorrichtung ist in der beigefügten Zeichnung mit den Figuren 1 und 2 schematisch dargestellt. Im Handel ist eine Ausführungsform einer derartigen Mischvorrichtung als sogenannter "Intensivmischer Typ R 08", der von der'Firma Eirich, DE, gebaut wird, erhältlich.

Die Figur 1 zeigt einen Schnitt durch eine schematisch dargestellte Mischvorrichtung, die einen zylindrischen Behälter 1 zur Aufnahme von Mischgut aufweist. Der Behälter 1 ist drehbar gelagert, wobei die Lagerung mit der Bezugsziffer 6 angedeutet ist. Die Rotation des Behälters 1 wird mit dem ortsfesten Motor 2 bewirkt, der ein Zahnrad 4 antreibt, welches in ein ringförmiges Gegenstück 5 eingreift, das mit dem Boden des drehbar gelagerten Behälters 1 fix verbunden ist. Die Bezugsziffer 3 bezeichnet ein Getriebe.

Die Bezugsziffer 7 bezeichnet eine abnehmbare, ortsfeste Abdeckung für den Behälter. Die Abdeckung 7 besitzt am Rand eine Führung 13, in welcher die Behälterwand 1 gleitet. Die Bezugsziffer 8 bezeichnet einen Motor, der über ein Getriebe 9 das ortsfeste Mischwerkzeug 10 in Drehung versetzt. Das Mischwerkzeug 10 besitzt an seinem unteren Ende messerartig ausgebildete Rührschaufeln 11. An der Abdeckung 7 ist noch ein weiteres ortsfestes Mischwerkzeug 12 angebracht, welches als länglicher Schaber ausgebildet ist und eine Belagsbildung an der Wand und an anderen Innenoberflächen des rotierenden Behälters 1 verhindert.

Die Figur 2 zeigt eine Draufsicht auf die erfindungsgemäß verwendete Mischvorrichtung, bei welcher die Abdeckung 7 abgenommen ist. In der Figur 2 ist das Mischwerkzeug 10 mit den Mischelementen 11, das weitere Mischwerkzeug 12 und der Behälter 1 zu sehen. Die Drehrichtung des Behälters 1 und des Mischwerkzeuges 10 sind mit Pfeilen angedeutet. In der Figur 2 sind die beiden Drehrichtungen zueinander gegensinnig.

Die Mischvorrichtung kann mit einer Heiz- oder Kühlvorrichtung (nicht gezeigt) versehen sein. Die Mischvorrichtung kann auf herkömmliche Weise erwärmt bzw. gekühlt werden. Die Mischvorrichtung kann aber natürlich auch mit einer Elektroheizung erwärmt werden.

Mit den nachfolgenden Beispielen wird eine zweckmäßige Ausführungsform der Erfindung noch näher beschrieben, wobei als Mischvorrichtung der "Intensivmischer Typ R 08", der von der Firma Eirich, DE, gebaut wird, verwendet wurde.

### Beispiel 1

Es wurden im Mischer Zellstoffblätter (Alicell V-LV) mit einer Länge von 800 mm und einer Breite von 150 mm vorgelegt und danach eine wäßrige NMMO-Lösung mit einem Gehalt von 74 Masse% NMMO zugegeben, wobei die Mengen so gewählt wurden, daß eine Cellulosesuspension mit einem Gehalt an 13 Masse% Cellulose, bezogen auf die Masse der Suspension, erhalten werden konnte. Die Temperatur des Mischgutes betrug etwa 80°C.

Anschließend wurde der Mischer in Betrieb genommen, wobei der Behälter 1 mit etwa 30 Umdrehungen pro Minute und das Mischwerkzeug 10 mit etwa 300 Umdrehungen pro Minute (in Gegensinn zum Behälter 1) gedreht wurde. Es konnte das gesamte, im Mischer befindliche Mischgut in eine Suspension übergeführt werden. Um das Ausmaß der Aufspaltung des Zellstoffs in Einzelfasern festzustellen, wurden nach 2, 5 und 10 Minuten Mischzeit jeweils Proben genommen und ihre Qualität durch Blattbildung bestimmt. Zur Blattbildung wurden 25 g Probe (60°C) in einem 2000 ml Becherglas mit 1000 g Wasser (65°C) versetzt und mit einem Magnetrührer (Rührknochen: 5 cm; 500 Umdrehungen pro Minute) 15 Minuten gerührt. Danach wurde die erhaltene Suspension auf den Blattbildner aufgegeben und durch schnelles Absaugen auf Blatt gebildet, welches im Trockenschrank getrocknet wurde. Das Aussehen des getrockneten Blattes wurde festgestellt. Die Ergebnisse sind in der untenstehenden Tabelle angegeben. Das Ausmaß der Aufspaltung des Zellstoffs in Einzelfasern ist dabei umso höher, je weniger Stippen im gebildeten Blatt zu beobachten sind.

Der Tabelle ist zu entnehmen, daß, wie bereits oben erwähnt, aus dem Mischgut eine Suspension gebildet werden konnte, und daß ferner bereits nach zweiminütigem Mischen eine Suspension erhalten wird, wobei das mit dieser Suspension gebildete Blatt keine Stippen zeigt, was bedeutet, daß der Zellstoff praktisch vollständig in seine Einzelfasern aufgespalten ist.

### Beispiel 2

Es wurde analog Beispiel 1 vorgegangen, jedoch statt Zellstoffblättern Zellstoffstreifen (Alicell V-LV) mit einer Länge von 400 mm und einer Breite von 4 mm eingesetzt.

Der Tabelle ist zu entnehmen, daß aus dem Mischgut eine Suspension gebildet werden konnte, und daß ferner bereits nach zweiminütigem Mischen eine Suspension erhalten wird, wobei das mit dieser Suspension gebildete Blatt keine Stippen zeigt, was bedeutet, daß der Zellstoff praktisch vollständig in seine Einzelfasern aufgespalten ist.

### Beispiel 3

Es wurde analog Beispiel 1 vorgegangen, jedoch statt Zellstoffblättern gemahlener (Schneidmühle) Zellstoff (Alicell V-LV; conduxmühle; Sieblöcher quadratisch, 16 mm²) und eine wäßrige NMMO-Lösung mit einem Gehalt von 78 Masse% NMMO eingesetzt. Ferner wurde der gemahlene Zellstoff in einer Menge eingesetzt, daß eine Cellulosesuspension mit einem Gehalt an 15,5 Masse% Cellulose, bezogen auf die Masse der Suspension, erhalten werden konnte.

Die Ergebnisse der Blattbildung sind in der Tabelle angegeben und zeigen, daß mit der erfindungsgemäß verwendeten Mischvorrichtung selbst mit dem auf übliche Weise zerkleinerten Zellstoff (gemahlen) und mit einer höher konzentrierten NMMO-Lösung und mit erheblich höherer Stoffdichte überraschend eine Suspension hergestellt werden konnte. Bei der Blattbildung wurden zwar Stippen festgestellt, die allerdings mit einer Behandlung in einem Refiner in Einzelfasern aufgespalten werden konnten.

**Tabelle**

| Beispiel | Mischzeit | Suspension | Blattbildung |
|---|---|---|---|
| 1 | 2 | ja | keine Stippen, wolkig |
| 1 | 5 | ja | keine Stippen, wolkig |
| 1 | 10 | ja | keine Stippen, wolkig |
| | | | |
| 2 | 2 | ja | keine Stippen¹, wolkig |
| 2 | 5 | ja | keine Stippen¹, wolkig |
| 2 | 10 | ja | keine Stippen², wolkig |
| | | | |
| 3 | 2 | ja | sehr viele Stippen³ |
| 3 | 5 | ja | keine Verbesserung |
| 3 | 10 | ja | keine Verbesserung⁴ |

| | | | |
|---|---|---|---|
| Anmerkung 1= vereinzelt aufgeweitete Streifenreste; | | | |
| 2= vereinzelt kleine offene Streifenreste; | | | |
| 3= kaum geöffnete längere Fasern; das Blatt gibt feinen Cellulosestaub ab; | | | |
| 4= das Blatt ist jedoch homogener und gibt weniger Cellulosestaub ab. | | | |

Aus den erfindungsgemäß hergestellten Suspensionen konnten Spinnmassen guter Qualität hergestellt werden. Es hat sich gezeigt, daß die in den Beispielen 1 und 2 hergestellten Suspensionen sogar eine derart gute Qualität aufwiesen, daß sie direkt, d.h. ohne Nachbehandlung in einem Refiner, zur Lösungsherstellung eingesetzt werden konnten.

### Beispiel 4 (Vergleich)

2,2 kg Zellstoffblätter (Buckeye V5) mit einer Größe von 7 x 7 cm² wurden mit 6,23 kg einer wäßrigen NMMO-Lösung (72%; 65°C) in einem herkömmlichen Laborpulper (Fassungsvermögen: 41 Liter) mit ruhendem Behälter 30 Sekunden gemischt. Anschließend wurden weitere 6,23 kg NMMO-Lösung zugegeben, sodaß die Cellulosekonzentration 15% war, und 90 Sekunden gemischt. Dabei konnte festgestellt werden, daß an der Behälterwand kein Mischen stattfand. Der Zellstoff war nur gequollen und nur zur Hälfte gepulpt.

Danach wurden weitere 3,0 kg NMMO-Lösung zugegeben, sodaß die Cellulosekonzentration auf 12,5% abnahm, und wurde 40 Sekunden gemischt. Es konnte keine Verbesserung festgestellt werden.

Danach wurden noch einmal 3,0 kg NMMO-Lösung zugegeben, sodaß die Cellulosekonzentration auf 10,6% abnahm, und wurde 60 Sekunden gemischt. Es konnte eine geringfügige Verbesserung festgestellt werden. Erst nach weiteren 180 Sekunden Mischzeit konnte eine Suspension hergestellt werden, die jedoch keiner Blattbildung unterzogen wurde, da die Stoffdichte (10,6%) für das Aminoxidverfahren nicht ökonomisch interessant erscheint.

Dieses Ergebnis zeigt, daß es mit der verwendeten herkömmlichen Labor-Mischvorrichtung mit ruhendem Behälter nicht möglich war, eine Suspension mit einer Stoffdichte von über 11% herzustellen.

### Beispiel 5 (Vergleich)

Ein herkömmlicher Pulper (Fassungsvermögen: 1500 l) mit ruhendem Behälter wurde mit 900 l NMMO-Lösung (74%, 70-80°C) beschickt. Anschließend wurde Blattzellstoff ohne Vorzerkleinerung schrittweise zugegeben, wobei nach ca. 12 Minuten und Erreichen einer Stoffdichte von 11,57% abgebrochen werden mußte, da keine Erhöhung der Stoffdichte mehr möglich war, da in den Randzonen kein Vermischen stattfand und somit keine Suspension erhalten wurde.

## Patentansprüche

1. Verfahren zur Herstellung einer homogenen Suspension von Cellulose in einer wäßrigen Lösung eines tertiären Aminoxids, wobei Zellstoff in einer Mischvorrichtung, die einen Behälter zur Aufnahme der Suspension und ein Mischwerkzeug aufweist, mit der wäßrigen Lösung des tertiären Aminoxids gemischt wird,
**dadurch gekennzeichnet, daß**
eine Mischvorrichtung eingesetzt wird, deren Behälter während des Mischens rotiert.

2. Verfahren nach Anspruch 1, **dadurch gekennzeichnet, daß** die eingesetzte Mischvorrichtung ein Mischwerkzeug aufweist, welches während des Mischens nicht bewegt wird.

3. Verfahren nach Anspruch 2, **dadurch gekennzeichnet, daß** das Mischwerkzeug als Paddel, Leiste oder Wendel ausgebildet ist.

4. Verfahren nach Anspruch 3, **dadurch gekennzeichnet, daß** das Mischwerkzeug so ausgebildet und im Behälter angeordnet ist, daß es während des Mischens eine Belagsbildung an der Wand des Behälters verhindert.

5. Verfahren nach einem der Ansprüche 1 bis 4, **dadurch gekennzeichnet, daß** die eingesetzte Mischvorrichtung ein Mischwerkzeug aufweist, welches während des Mischens rotiert.

6. Verfahren nach Anspruch 5, **dadurch gekennzeichnet, daß** das rotierende Mischwerkzeug exzentrisch angeordnet ist.

7. Verfahren nach einem der Ansprüche 5 oder 6, **dadurch gekennzeichnet, daß** das Mischwerkzeug im Gegensinn zum rotierenden Behälter rotiert.

8. Verfahren nach einem der Ansprüche 1 bis 7, **dadurch gekennzeichnet, daß** der Behälter eine Symmetrieachse aufweist, um welche er rotiert.

9. Verfahren nach Anspruch 8, **dadurch gekennzeichnet, daß** die Symmetrieachse zur Waagrechten geneigt ist.

10. Verfahren nach einem der Ansprüche 1 bis 9, **dadurch gekennzeichnet, daß** das tertiäre Aminoxid in der wäßrigen Lösung zu 60-82 Masse% enthalten ist.

11. Verfahren nach einem der Ansprüche 1 bis 10, **dadurch gekennzeichnet, daß** es bei einer Temperatur zwischen 60 und 90°C ausgeführt wird.

12. Verwendung einer Mischvorrichtung mit einem rotierenden Behälter zur Herstellung einer homogenen Suspension von Cellulose in einer wäßrigen Lösung eines tertiären Aminoxids.

13. Verwendung nach Anspruch 12, **dadurch gekennzeichnet, daß** die zur Suspensionsherstellung eingesetzte Cellulose eine Teilchengöße von mindestens 20 cm² besitzt.

14. Verfahren zur Herstellung einer formbaren Celluloselösung, **dadurch gekennzeichnet, daß** eine gemäß den Ansprüchen 1 bis 11 hergestellte homogene Suspension unter Abdampfung von Wasser zu einer formbaren Celluloselösung verarbeitet wird.

15. Verfahren nach Anspruch 14, **dadurch gekennzeichnet, daß** es in einem Dünnschichtbehandlungsapparat durchgeführt wird.

16. Verfahren zur Herstellung cellulosischer Formkörper, **dadurch gekennzeichnet, daß** eine gemäß Anspruch 14 oder 15 hergestellte, formbare Celluloselösung in an sich bekannter Weise zu Folien, Fasern, Membranen oder anderen Formkörpern verarbeitet wird.

## Claims

1. A process for the production of a homogeneous suspension of cellulose in an aqueous solution of a tertiary amine-oxide wherein pulp is mixed with said aqueous solution of said tertiary amine-oxide in a mixing device comprising a receptacle to receive said suspension and a mixing tool,
**characterized in that**
a mixing device having a receptacle which rotates during mixing is used.

2. A process according to Claim 1, **characterized in that** said mixing device used comprises a mixing tool which is not moved during mixing.

3. A process according to Claim 2, **characterized in that** said mixing tool is provided as a paddle, jib or spiral.

4. A process according to Claim 3, **characterized in that** said mixing tool is provided and arranged in said receptacle such that during mixing it prevents the formation of a coat on the wall of said receptacle.

5. A process according to one of the Claims 1 to 4, **characterized in that** said mixing device used comprises a mixing tool which rotates during mixing.

6. A process according to Claim 5, **characterized in that** said rotating mixing device is eccentrically arranged.

7. A process according to one of the Claims 5 or 6, **characterized in that** said mixing tool rotates in opposite direction to said rotating receptacle.

8. A process according to one of the Claims 1 to 7, **characterized in that** said receptacle has a symmetrical axis wherearound it rotates.

9. A process according to Claim 8, **characterized in that** said symmetrical axis is inclined towards the horizontal level.

10. A process according to one of the Claims 1 to 9, **characterized in that** said tertiary amine-oxide is contained in said aqueous solution in an amount of from 60 to 82% by mass.

11. A process according to one of the Claims 1 to 10, **characterized in that** it is carried out at a temperature of from 60 to 90°C.

12. Use of a mixing device having a rotating receptacle for the production of a homogeneous suspension of cellulose in an aqueous solution of a tertiary amine-oxide.

13. Use according to Claim 12, **characterized in that** said cellulose used to produce said suspension has a particle size of not less than 20 cm².

14. A process for the production of a mouldable cellulose solution, **characterized in that** a homogeneous suspension produced according to Claims 1 to 11 is processed into a mouldable cellulose solution, while water is evaporated.

15. A process according to Claim 14, **characterized in that** it is carried out in a thin-film treatment apparatus.

16. A process for the production of cellulose moulded bodies, **characterized in that** a mouldable cellulose solution produced according to Claim 14 or 15 is processed into films, fibres, membranes or other moulded bodies in a substantially known way.

## Revendications

1. Procédé de préparation d'une suspension homogène de cellulose dans une solution aqueuse d'un oxyde d'amine tertiaire, dans lequel on mélange la cellulose avec la solution aqueuse de l'oxyde d'amine tertiaire dans un dispositif de mélange comprenant un récipient destiné à recevoir la suspension et un outil de mélange, **caractérisé en ce que** l'on utilise un dispositif de mélange dont le récipient tourne pendant le mélange.

2. Procédé selon la revendication 1, **caractérisé en ce que** le dispositif de mélange utilisé comprend un outil de mélange qui n'est pas en mouvement pendant le mélange.

3. Procédé selon la revendication 2, **caractérisé en ce que** l'outil de mélange est constitué d'une pale, d'une baguette ou d'une hélice.

4. Procédé selon la revendication 3, **caractérisé en ce que** l'outil de mélange est configuré et disposé dans le récipient de manière à empêcher la formation de dépôts sur la paroi du récipient pendant le mélange.

5. Procédé selon l'une des revendications 1 à 4, **caractérisé en ce que** le dispositif de mélange utilisé comporte un outil de mélange qui tourne pendant le mélange.

6. Procédé selon la revendication 5, **caractérisé en ce que** l'outil de mélange rotatif est disposé de façon excentrique.

7. Procédé selon l'une des revendications 5 ou 6, **caractérisé en ce que** l'outil de mélange tourne dans le sens contraire du récipient rotatif.

8. Procédé selon l'une des revendications 1 à 7, **caractérisé en ce que** le récipient a un axe de symétrie autour duquel il tourne.

9. Procédé selon la revendication 8, **caractérisé en ce que** l'axe de symétrie est incliné par rapport à l'horizontale.

10. Procédé selon l'une des revendications 1 à 9, **caractérisé en ce que** la teneur de la solution aqueuse en oxyde d'amine tertiaire est de 60 à 82 % en masse.

11. Procédé selon l'une des revendications 1 à 10, **caractérisé en ce qu'**il s'effectue à une température comprise entre 60 et 90°C.

12. Utilisation d'un dispositif de mélange à récipient rotatif pour la préparation d'une suspension homogène de cellulose dans une solution aqueuse d'un oxyde d'amine tertiaire.

13. Utilisation selon la revendication 12, **caractérisée en ce que** la cellulose utilisée pour la préparation de la suspension a une taille de particules d'au moins 20 cm².

14. Procédé de préparation d'une solution de cellulose apte au moulage, **caractérisé en ce que** l'on transforme une suspension homogène préparée selon les revendications 1 à 11 en une solution de cellulose apte au moulage en évaporant de l'eau.

15. Procédé selon la revendication 14, **caractérisé en ce qu'**il s'effectue dans un appareil de traitement en couche mince.

16. Procédé de préparation de corps moulés cellulosiques, **caractérisé en ce que** l'on transforme de manière connue en soi une solution de cellulose apte au moulage préparée selon la revendication 14 ou 15 en feuilles, en fibres, en membranes ou en d'autres corps moulés.
